# EUROPEAN PATENT SPECIFICATION

(11) **EP 3 571 326 B1**
(45) Date of publication and mention of the grant of the patent: **09.12.2020**
(21) Application number: 18706329.2
(22) Date of filing: 16.01.2018
(51) Int. Cl.: C22C 21/10, C22F 1/053

(54) **RAPID AGING OF HIGH STRENGTH 7XXX ALUMINUM ALLOYS AND METHODS OF MAKING THE SAME**
SCHNELLE ALTERUNG VON HOCHFESTEN 7XXX-ALUMINIUMLEGIERUNGEN UND VERFAHREN ZUR HERSTELLUNG DAVON
VIEILLISSEMENT RAPIDE D'ALLIAGES D'ALUMINIUM 7XXX ET PROCÉDÉS DE FABRICATION ASSOCIÉS

(30) Priority: 17.01.2017 US 201762447132 P
(43) Date of publication of application: 27.11.2019
(73) Proprietor: Novelis, Inc., Atlanta, GA 30326 (US)
(72) Inventor: WU, Cedric, Marietta Georgia 30062 (US); KULKARNI, Rahul Vilas, Marietta Georgia 30066 (US); KAMAT, Rajeev G., Marietta Georgia 30062 (US); MOHANTY, Rashmi Ranjan, Roswell Georgia 30075 (US); TALLA, Rajasekhar, Woodstock Georgia 30188 (US)
(74) Representative: Weickmann & Weickmann PartmbB
(86) International application number: PCT/US2018/013770
(87) International publication number: WO 2018/136382

(56) References cited:
- US-A1- 2016 160 332

## Description

### FIELD

Described herein are high-strength 7xxx series aluminum alloys and methods of making and processing the same.

### BACKGROUND

Aluminum alloys with high strength are desirable for improved product performance in many applications, including automotive applications, transportation (including, for example and without limitation, trucks, trailers, trains, aerospace, and marine) applications, and electronics applications. Such alloys should exhibit, among other properties, high strength. Achieving such alloys often requires costly processing steps. For example, artificial aging procedures can require up to 24 hours soaking at elevated temperatures, creating a highly inefficient manufacturing process. The ability to eliminate such an inefficient process provides lower processing costs, lower energy costs and lower consumer costs. New and efficient methods of processing alloys are needed. Such methods should result in alloys having suitable yield strengths as required by original equipment manufacturers (OEMs).

US 2016/0160332 A1 relates to a method for achieving desired yield strength and elongation in an 7xxx aluminum alloy sheet comprising a) rapidly heating the sheet to a temperature of 450°C to 510°C, b) maintaining the sheet at the temperature of 450°C to 510°C for up to 20 minutes, c) rapidly cooling the sheet to room temperature at more than 50°C per second, d) heating the sheet to a temperature between about 50°C and 150°C, e) maintaining the sheet at the temperature between about 50°C and 150°C for a duration of about 0.5 hrs to 6 hrs.

### SUMMARY

Covered embodiments of the invention are defined by the claims, not this summary. This summary is a high-level overview of various aspects of the invention and introduces some of the concepts that are further described in the Detailed Description section below. This summary is not intended to identify key or essential features of the claimed subject matter, nor is it intended to be used in isolation to determine the scope of the claimed subject matter. The subject matter should be understood by reference to appropriate portions of the entire specification, any or all drawings and each claim.

Described herein are methods of processing a 7xxx series aluminum alloy metal product. The methods comprise solutionizing a sheet, a plate, or a shate at a temperature of at least 460 °C; quenching and deforming the sheet, the plate, or the shate to produce an aluminum alloy article; and pre-aging the aluminum alloy article by heating the aluminum alloy article to a temperature of from 100 °C to 225 °C for a period of time of from 10 minutes to 45 minutes. Optionally, the quenching can be performed before the deforming in the quenching and deforming step. Optionally, the deforming is performed before the quenching in the quenching and deforming step. Optionally, the quenching and deforming are performed simultaneously in the quenching and deforming step. The temperature in the pre-aging step can be from about 100 °C to about 125 °C. The method further comprises the step of thermally treating the aluminum alloy article after the pre-aging step. The thermally treating step comprises paint baking performed by heating the aluminum alloy article to a temperature of from 100 °C to 225 °C for a period of time up to 2 hours.

Also described herein are rapidly aged aluminum alloy metal products. The aluminum alloy metal product comprises a 7xxx series aluminum alloy metal product. Optionally, the aluminum alloy metal product is prepared from a monolithic alloy. Optionally, the aluminum alloy metal product is prepared from a clad aluminum alloy product having a core layer and at least one clad layer. In some cases, the core layer has a different composition than the at least one clad layer.

Also described herein are products prepared according to the methods described herein. The product can be a sheet, a plate, or a shate. The product can have a yield strength of at least about 460 MPa (e.g., at least about 480 MPa). Further described herein are automotive body parts (e.g., a bumper, a side beam, a roof beam, a cross beam, a pillar reinforcement, an inner panel, an outer panel, a side panel, an inner hood, an outer hood, or a trunk lid panel); aerospace body parts; and electronic device housings.

Other objects and advantages of the invention will be apparent from the following detailed description of non-limiting examples of the invention and figures.

### BRIEF DESCRIPTION OF THE FIGURES

Figure 1 is a schematic diagram of an exemplary method described herein.
Figure 2 is a graph showing a comparison between the yield strength of aluminum alloys produced by an exemplary method described herein with alloys produced by a comparative method.
Figure 3 is a graph showing yield strengths of aluminum alloys, processed with and without an annealing step, after a paint baking step.
Figures 4A and 4B are graphs showing the yield strengths of aluminum alloys under varying paint baking conditions.
Figures 5A and 5B are graphs showing the yield strengths and total elongations of aluminum alloys under varying paint baking conditions.
Figure 6 is a graph showing the yield strengths of aluminum alloys after natural aging in combination with artificial aging or paint baking.

### DETAILED DESCRIPTION

Described herein are methods of processing 7xxx aluminum alloys using a rapid pre-aging step, along with alloys prepared according to the methods. The methods of processing the 7xxx alloys described herein provide a more efficient method for producing alloys having the required strength. For example, conventional methods of processing alloys can require 24 hours of aging. The methods described herein, however, substantially reduce the aging time, often requiring one hour or less of aging time. The resulting aluminum alloy products, when subjected to subsequent thermal treatment (e.g., paint baking or coating), surprisingly exhibit comparable strengths as those prepared according to conventional methods with longer aging times.

### Definitions and Descriptions:

The terms "invention," "the invention," "this invention" and "the present invention" used herein are intended to refer broadly to all of the subject matter of this patent application and the claims below. Statements containing these terms should be understood not to limit the subject matter described herein or to limit the meaning or scope of the patent claims below.

In this description, reference is made to alloys identified by aluminum industry designations, such as "series" or "7xxx." For an understanding of the number designation system most commonly used in naming and identifying aluminum and its alloys, see "International Alloy Designations and Chemical Composition Limits for Wrought Aluminum and Wrought Aluminum Alloys" or "Registration Record of Aluminum Association Alloy Designations and Chemical Compositions Limits for Aluminum Alloys in the Form of Castings and Ingot," both published by The Aluminum Association.

As used herein, the meaning of "a," "an," or "the" includes singular and plural references unless the context clearly dictates otherwise.

As used herein, a plate generally has a thickness of greater than about 15 mm. For example, a plate may refer to an aluminum product having a thickness of greater than 15 mm, greater than 20 mm, greater than 25 mm, greater than 30 mm, greater than 35 mm, greater than 40 mm, greater than 45 mm, greater than 50 mm, or greater than 100 mm.

As used herein, a shate (also referred to as a sheet plate) generally has a thickness of from about 4 mm to about 15 mm. For example, a shate may have a thickness of 4 mm, 5 mm, 6 mm, 7 mm, 8 mm, 9 mm, 10 mm, 11 mm, 12 mm, 13 mm, 14 mm, or 15 mm.

As used herein, a sheet generally refers to an aluminum product having a thickness of less than about 4 mm. For example, a sheet may have a thickness of less than 4 mm, less than 3 mm, less than 2 mm, less than 1 mm, less than 0.5 mm, less than 0.3 mm, or less than 0.1 mm.

Reference is made in this application to alloy temper or condition. For an understanding of the alloy temper descriptions most commonly used, see "American National Standards (ANSI) H35 on Alloy and Temper Designation Systems." An F condition or temper refers to an aluminum alloy as fabricated. An O condition or temper refers to an aluminum alloy after annealing. A T4 condition or temper refers to an aluminum alloy after solution heat treatment (i.e., solutionization) followed by natural aging. A T6 condition or temper refers to an aluminum alloy after solution heat treatment followed by artificial aging. A T8x condition or temper refers to an aluminum alloy solution heat treated, cold worked, and artificially aged.

As used herein, the meaning of "room temperature" can include a temperature of from about 15 °C to about 30 °C, for example about 15 °C, about 16 °C, about 17 °C, about 18 °C, about 19 °C, about 20 °C, about 21 °C, about 22 °C, about 23 °C, about 24 °C, about 25 °C, about 26 °C, about 27 °C, about 28 °C, about 29 °C, or about 30 °C. As used herein, the meaning of "ambient conditions" can include temperatures of about room temperature, relative humidity of from about 20 % to about 100 %, and barometric pressure of from about 975 millibar (mbar) to about 1050 mbar. For example, relative humidity can be about 20 %, about 21 %, about 22 %, about 23 %, about 24 %, about 25 %, about 26 %, about 27 %, about 28 %, about 29 %, about 30 %, about 31 %, about 32 %, about 33 %, about 34 %, about 35 %, about 36 %, about 37 %, about 38 %, about 39 %, about 40 %, about 41 %, about 42 %, about 43 %, about 44 %, about 45 %, about 46 %, about 47 %, about 48 %, about 49 %, about 50 %, about 51 %, about 52 %, about 53 %, about 54 %, about 55 %, about 56 %, about 57 %, about 58 %, about 59 %, about 60 %, about 61 %, about 62 %, about 63 %, about 64 %, about 65 %, about 66 %, about 67 %, about 68 %, about 69 %, about 70 %, about 71 %, about 72 %, about 73 %, about 74 %, about 75 %, about 76 %, about 77 %, about 78 %, about 79 %, about 80 %, about 81 %, about 82%, about 83 %, about 84 %, about 85 %, about 86 %, about 87 %, about 88 %, about 89 %, about 90 %, about 91 %, about 92 %, about 93 %, about 94 %, about 95 %, about 96 %, about 97 %, about 98 %, about 99 %, or about 100 %. For example, barometric pressure can be about 975 mbar, about 980 mbar, about 985 mbar, about 990 mbar, about 995 mbar, about 1000 mbar, about 1005 mbar, about 1010 mbar, about 1015 mbar, about 1020 mbar, about 1025 mbar, about 1030 mbar, about 1035 mbar, about 1040 mbar, about 1045 mbar, or about 1050 mbar.

All ranges disclosed herein are to be understood to encompass any and all subranges subsumed therein. For example, a stated range of "1 to 10" should be considered to include any and all subranges between (and inclusive of) the minimum value of 1 and the maximum value of 10; that is, all subranges beginning with a minimum value of 1 or more, e.g. 1 to 6.1, and ending with a maximum value of 10 or less, e.g., 5.5 to 10.

The following aluminum alloys are described in terms of their elemental composition in weight percentage (wt. %) based on the total weight of the alloy. In certain examples of each alloy, the remainder is aluminum, with a maximum wt. % of 0.15 % for the sum of the impurities.

### Preparing and Processing Methods

Alloys suitable for the described methods, as further described below, can be cast into a cast product. In some examples, the alloy is a monolithic alloy. In some examples, the alloy is a clad aluminum alloy, having a core layer and one or two cladding layers. In some cases, the core layer may be different from one or both of the cladding layers. The alloys can be cast using any casting process performed according to standards commonly used in the aluminum industry as known to one of ordinary skill in the art. For example, the alloys may be cast using a Continuous Casting (CC) process that may include, but is not limited to, the use of twin belt casters, twin roll casters, or block casters. In some examples, the casting process is performed by a CC process to form a cast product such as a billet, slab, shate, strip, or the like. In some examples, the casting process is performed by a Direct Chill (DC) casting process to form a cast product such as an ingot. The cast product can then be subjected to further processing steps. In one non-limiting example, the processing method includes homogenizing, hot rolling, preheating, solutionizing, and quenching. Optionally, the processing steps further include annealing and/or cold rolling if desired.

### Homogenization

The homogenization step can include heating a cast product, such as an ingot, prepared from an alloy composition described herein to attain a peak metal temperature (PMT) of about, or at least about, 450 °C (e.g., at least 460 °C, at least 470 °C, at least 480 °C, at least 490 °C, at least 500 °C, at least 510 °C, at least 520 °C, at least 530 °C, at least 540 °C, at least 550 °C, at least 560 °C, at least 570 °C, or at least 580 °C). For example, the cast aluminum alloy product can be heated to a temperature of from about 450 °C to about 580 °C, from about 460 °C to about 575 °C, from about 470 °C to about 570 °C, from about 480 °C to about 565 °C, from about 490 °C to about 555 °C, or from about 500 °C to about 550 °C. In some cases, the heating rate to the PMT can be about 100 °C/hour or less, 75 °C/hour or less, 50 °C/hour or less, 40 °C/hour or less, 30 °C/hour or less, 25 °C/hour or less, 20 °C/hour or less, or 15 °C/hour or less. In other cases, the heating rate to the PMT can be from about 10 °C/min to about 100 °C/min (e.g., from about 10 °C/min to about 90 °C/min, from about 10 °C/min to about 70 °C/min, from about 10 °C/min to about 60 °C/min, from about 20 °C/min to about 90 °C/min, from about 30 °C/min to about 80 °C/min, from about 40 °C/min to about 70 °C/min, or from about 50 °C/min to about 60 °C/min).

The cast aluminum alloy product is then allowed to soak (i.e., held at the indicated temperature) for a period of time. According to one non-limiting example, the cast aluminum alloy product is allowed to soak for up to about 36 hours (e.g., from about 30 minutes to about 36 hours, inclusively). For example, the cast aluminum alloy product can be soaked at a temperature for 30 minutes, 1 hour, 2 hours, 3 hours, 4 hours, 5 hours, 6 hours, 7 hours, 8 hours, 9 hours, 10 hours, 11 hours, 12 hours, 13 hours, 14 hours, 15 hours, 16 hours, 17 hours, 18 hours, 19 hours, 20 hours, 21 hours, 22 hours, 23 hours, 24 hours, 25 hours, 26 hours, 27 hours, 28 hours, 29 hours, 30 hours, 31 hours, 32 hours, 33 hours, 34 hours, 35 hours, 36 hours, or anywhere in between.

### Hot Rolling

Following the homogenization step, a hot rolling step can be performed. The hot rolling step can include a hot reversing mill operation and/or a hot tandem mill operation. The hot rolling step can be performed at a temperature ranging from about 250 °C to about 550 °C (e.g., from about 300 °C to about 500 °C or from about 350 °C to about 450 °C). In certain cases, the cast aluminum alloy product can be hot rolled to an about 4 mm to about 15 mm thick gauge (e.g., from about 5 mm to about 12 mm thick gauge), which is referred to as a shate. For example, the cast aluminum alloy product can be hot rolled to an about 4 mm thick gauge, about 5 mm thick gauge, about 6 mm thick gauge, about 7 mm thick gauge, about 8 mm thick gauge, about 9 mm thick gauge, about 10 mm thick gauge, about 11 mm thick gauge, about 12 mm thick gauge, about 13 mm thick gauge, about 14 mm thick gauge, or about 15 mm thick gauge. In certain cases, the cast aluminum alloy product can be hot rolled to a gauge greater than 15 mm thick (i.e., a plate). In other cases, the cast aluminum alloy product can be hot rolled to a gauge less than 4 mm (i.e., a sheet). The temper of the as-rolled sheets, plates, and shates is referred to as F-temper.

### Optional Processing Steps: Annealing Step and Cold Rolling Step

In certain aspects, the alloy undergoes further processing steps after the hot rolling step and before any subsequent steps (e.g., before a solutionizing step). Further process steps may include an annealing procedure and a cold rolling step.

The annealing step can include heating the alloy from room temperature (e.g., from about 15 °C to about 30 °C) to a temperature from about 300 °C to about 500 °C (e.g., from about 305 °C to about 495 °C, from about 310 °C to about 490 °C, from about 315 °C to about 485 °C, from about 320 °C to about 480 °C, from about 325 °C to about 475 °C, from about 330 °C to about 470 °C, from about 335 °C to about 465 °C, from about 340 °C to about 460 °C, from about 345 °C to about 455 °C, from about 350 °C to about 450 °C, from about 355 °C to about 445 °C, from about 360 °C to about 440 °C, or from about 365 °C to about 435 °C, from about 400 °C to about 450 °C, from about 425 °C to about 475 °C, or from about 450 °C to about 500 °C).

Optionally, the alloy can soak at the annealing temperature for a period of time. In one non-limiting example, the alloy is allowed to soak for up to approximately 4 hours (e.g., from about 15 to about 240 minutes, inclusively). For example, the sheet, plate, or shate can be soaked at a temperature of from about 400 °C to about 500 °C for 15 minutes, 20 minutes, 25 minutes, 30 minutes, 35 minutes, 40 minutes, 45 minutes, 50 minutes, 55 minutes, 60 minutes, 65 minutes, 70 minutes, 75 minutes, 80 minutes, 85 minutes, 90 minutes, 95 minutes, 100 minutes, 105 minutes, 110 minutes, 115 minutes, 120 minutes, 125 minutes, 130 minutes, 140 minutes, 145 minutes, 150 minutes, 155 minutes, 160 minutes, 165 minutes, 170 minutes, 175 minutes, 180 minutes, 185 minutes, 190 minutes, 195 minutes, 200 minutes, 205 minutes, 210 minutes, 215 minutes, 220 minutes, 225 minutes, 230 minutes, 235 minutes, or 240 minutes, or anywhere in between. In certain aspects, the alloy does not undergo an annealing step.

A cold rolling step can optionally be applied to the alloy before the solutionizing step. For example, an aluminum alloy plate or shate can be cold rolled to an about 0.1 mm to about 4 mm thick gauge (e.g., from about 0.5 mm to about 3 mm thick gauge), which is referred to as a sheet. For example, the cast aluminum alloy product can be cold rolled to a thickness of less than about 4 mm. For example, a sheet may have a thickness of less than 4 mm, less than 3 mm, less than 2 mm, less than 1 mm, less than 0.9 mm, less than 0.8 mm, less than 0.7 mm, less than 0.6 mm, less than 0.5 mm, less than 0.4 mm, less than 0.3 mm, less than 0.2 mm, or less than 0.1 mm. The temper of the as-rolled sheets is referred to as F-temper.

### Solutionizing

The sheet, the plate or the shate are solutionized at a temperature of at least 460°C. The solutionizing step can include heating the alloy from room temperature (e.g., from about 15 °C to about 30 °C) to a temperature of 460 °C or greater (e.g., from 460 °C to 600 °C, from 465 °C to 575 °C, from 470 °C to 550 °C, from 475 °C to 525 °C, or from 480 °C to 500 °C). The alloy can soak at the heated temperature for a period of time. In certain aspects, the alloy is allowed to soak for at least 30 seconds (e.g., from about 60 seconds to about 120 minutes inclusively). For example, the alloy can be soaked at the temperature above 460 °C for 30 seconds, 35 seconds, 40 seconds, 45 seconds, 50 seconds, 55 seconds, 60 seconds, 65 seconds, 70 seconds, 75 seconds, 80 seconds, 85 seconds, 90 seconds, 95 seconds, 100 seconds, 105 seconds, 110 seconds, 115 seconds, 120 seconds, 125 seconds, 130 seconds, 135 seconds, 140 seconds, 145 seconds, or 150 seconds, 5 minutes, 10 minutes, 15 minutes, 20 minutes, 25 minutes, 30 minutes, 35 minutes, 40 minutes, 45 minutes, 50 minutes, 55 minutes, 60 minutes, 65 minutes, 70 minutes, 75 minutes, 80 minutes, 85 minutes, 90 minutes, 95 minutes, 100 minutes, 105 minutes, 110 minutes, 115 minutes, or 120 minutes, or anywhere in between. In certain aspects, the solutionizing is performed immediately after the hot or cold rolling step. In certain aspects, the solutionizing is performed after an annealing step.

### Quenching and Deforming

The methods described herein include a quenching step. The term "quenching," as used herein, can include rapidly reducing a temperature of an aluminum alloy sheet, plate, or shate that has been solutionized as described above. In the quenching step, the sheet, plate, or shate is quenched with a liquid (e.g., water) and/or gas or another selected quench medium. In certain aspects, the sheet, plate, or shate can be quenched using water having a water temperature of between about 40 °C and about 75 °C. In certain aspects, the sheet, plate, or shate is quenched using forced air.

In certain aspects, the sheet, plate, or shate can then be cooled to a temperature of about 25 °C to about 65 °C at a quench speed that can vary between about 5 °C/s to 400 °C/s in a quenching step that is based on the selected gauge. For example, the quench rate can be from about 5 °C/s to about 375 °C/s, from about 10 °C/s to about 375 °C/s, from about 25 °C/s to about 350 °C/s, from about 50 °C/s to about 325 °C/s, from about 75 °C/s to about 300 °C/s, from about 100 °C/s to about 275 °C/s, from about 125 °C/s to about 250 °C/s, from about 150 °C/s to about 225 °C/s, or from about 175 °C/s to about 200 °C/s.

The disclosed processes include at least one deforming step. The term "deforming," as used herein, may include cutting, stamping, pressing, press-forming, drawing, shaping, straining or other processes that can create two- or three-dimensional shapes as known to one of ordinary skill in the art. The deforming step can be performed on an aluminum alloy sheet, plate, or shate that has a temperature of about room temperature (e.g., from about 15 °C to about 30 °C) (referred to as cold forming) or that has been heated to an elevated temperature (referred to as a warm forming process). Forming can be performed by stamping or pressing. In the stamping or pressing process step, described generally, an article is deformed by pressing it between two dies of complementary shape.

In some cases, the quenching step is performed before the deforming step. In these cases, the sheet, plate, or shate can be deformed at room temperature. In some cases, the deforming step is performed before the quenching step or the quenching step and deforming step can be performed simultaneously. In these cases, the sheet, plate, or shate can be deformed at an elevated temperature. Optionally, upon exiting a solutionizing furnace and before cooling, the solutionized aluminum alloy sheet, plate, or shate can be cut to a prescribed size and placed in a chilled die. In some cases, the sheet, plate, or shate is deformed while still at an elevated temperature and quenched upon completion of the deforming. In some examples, the simultaneous quenching and deforming the sheet, plate, or shate can include removing the sheet, plate, or shate from a solutionizing furnace; placing the solutionized sheet, plate, or shate in a chilled die, wherein the solutionized sheet, plate, or shate remains at an elevated temperature; and compressing the chilled die about the solutionized sheet, plate, or shate, wherein compressing the chilled die simultaneously deforms and quenches the solutionized sheet, plate, or shate.

### Rapid Pre-Aging

After the quenching and deforming steps, a rapid pre-aging step is performed. As used herein, rapid pre-aging refers to a pre-aging that is performed for a period from 10 minutes to 45 minutes. The rapid pre-aging step includes heating the sheet, plate, or shate to a temperature of from 100 °C to 225 °C (e.g., from 105 °C to 200 °C, from 110 °C to 180 °C, from 115 °C to 175 °C, or from 120 °C to 150 °C). For example, the rapid pre-aging step can include heating the sheet, plate, or shate to a temperature of 100 °C, 110 °C, 120 °C, 130 °C, 140 °C, 150 °C, 160 °C, 170 °C, 180 °C, 190 °C, 200 °C, 210 °C, 220 °C, or 225 °C.

The sheet, plate, or shate can soak at the heated temperature for a period of time. The pre-aging is performed for a period from 10 minutes to 45 minutes. The time between the quenching and deforming steps and the pre-aging step can be between 0 minutes and 1 month. For example, the time between quenching and deforming and pre-aging can be between 5 minutes and 2 days or between 10 minutes and 36 hours.

The aluminum alloy sheet, plate, or shate after the rapid pre-aging can be in a T8 temper.

### Alloy Compositions and Products and Properties of the Same

The alloys produced and processed according to the methods described herein are 7xxx series aluminum alloys. As a result of using above-described processing methods, the alloys exhibit high strength. Suitable alloys for use in the methods described herein include aluminum alloys having Zn as the principal alloying element other than aluminum. As used herein, suitable alloys for use in the methods described herein include at least about 2.0 % Zn. In some examples, suitable alloys include Zn in a range of from about 2.0 % to about 15.0 % (e.g., from about 3.0 % to about 14.0 %, from about 4.0 % to about 12 %, or from about 5.0 % to about 10 %). For example, suitable alloys for use herein include Zn in an amount of about 2.0 %, 2.1 %, 2.2 %, 2.3 %, 2.4 %, 2.5 %, 2.6 %, 2.7 %, 2.8 %, 2.9 %, 3.0 %, 3.1 %, 3.2 %, 3.3 %, 3.4 %, 3.5 %, 3.6 %, 3.7 %, 3.8 %, 3.9 %, 4.0 %, 4.1 %, 4.2 %, 4.3 %, 4.4 %, 4.5 %, 4.6 %, 4.7 %, 4.8 %, 4.9 %, 5.0 %, 5.1 %, 5.2 %, 5.3 %, 5.4 %, 5.5 %, 5.6 %, 5.7 %, 5.8 %, 5.9 %, 6.0 %, 6.1 %, 6.2 %, 6.3 %, 6.4 %, 6.5 %, 6.6 %, 6.7 %, 6.8 %, 6.9 %, 7.0 %, 7.1 %, 7.2 %, 7.3 %, 7.4 %, 7.5 %, 7.6 %, 7.7 %, 7.8 %, 7.9 %, 8.0 %, 8.1 %, 8.2 %, 8.3 %, 8.4 %, 8.5 %, 8.6 %, 8.7 %, 8.8 %, 8.9 %, 9.0 %, 9.1 %, 9.2 %, 9.3 %, 9.4 %, 9.5 %, 9.6 %, 9.7 %, 9.8 %, 9.9 %, 10.0 %, 10.1 %, 10.2 %, 10.3 %, 10.4 %, 10.5 %, 10.6 %, 10.7 %, 10.8 %, 10.9 %, 11.0 %, 11.1 %, 11.2 %, 11.3 %, 11.4 %, 11.5 %, 11.6 %, 11.7 %, 11.8 %, 11.9 %, 12.0 %, 12.1 %, 12.2 %, 12.3 %, 12.4 %, 12.5 %, 12.6 %, 12.7 %, 12.8 %, 12.9 %, 13.0 %, 13.1 %, 13.2 %, 13.3 %, 13.4 %, 13.5 %, 13.6 %, 13.7 %, 13.8 %, 13.9 %, 14.0 %, 14.1 %, 14.2 %, 14.3 %, 14.4 %, 14.5 %, 14.6 %, 14.7 %, 14.8 %, 14.9 %, or 15.0 % Zn. All are expressed in wt. %.The alloys for use in the methods described herein can further include Cu, Mg, Fe, Si, Zr, Mn, Cr, Ti, rare earth elements (i.e., one or more of Sc, Y, La, Ce, Pr, Nd, Pm, Sm, Eu, Gd, Tb, Dy, Ho, Er, Tm, Yb, and Lu), Mo, Nb, Be, B, Co, Sn, Sr, V, In, Hf, Ag, and Ni and other elements. For example, the alloys for use in the methods described herein can include Mo, Nb, Be, B, Co, Sn, Sr, V, In, Hf, Ag, and Ni in amounts of up to 0.20 % (e.g., from 0.01 % to 0.20 % or from 0.05 % to 0.15 %) based on the total weight of the alloy. Optionally, Ga, Ca, Bi, Na, and/or Pb may be present as impurities (i.e., in amounts of 0.05 % or below, 0.04 % or below, 0.03 % or below, 0.02 % or below, or 0.01 % or below).

Suitable alloys for use in the methods described herein include aluminum alloys described in U.S. Patent Application No. 15/336,982.
Exemplary alloys that can be produced and processed according to the methods described herein include one of the following 7xxx-series aluminum alloys, as defined by the Aluminum Association: 7075, 7108, 7108A, 7015, 7017, 7018, 7019, 7019A, 7020, 7021, 7024, 7025, 7028, 7030, 7031, 7033, 7035, 7035A, 7039, 7046, and 7046A, 7003, 7004, 7005, 7009, 7010, 7012, 7014, 7016, 71 16, 7022, 7122, 7023, 7026, 7029, 7129, 7229, 7032, 7033, 7034, 7036, 7136, 7037, 7040, 7140, 7041 , 7049, 7049A, 7149,7204, 7249, 7349, 7449, 7050, 7050A, 7150, 7250, 7055, 7155, 7255, 7056, 7060, 7064, 7065, 7068, 7168, 7175, 7475, 7076, 7178, 7278, 7278A, 7081, 7181, 7085, 7185, 7090, 7093, 7095, and 7099.

In some examples, the alloys for use in the methods described herein are monolithic alloys. In other examples, the alloys for use in the methods described herein are clad aluminum alloy products, having a core layer and one or two clad layers. The core layer and/or the clad layer can be a 7xxx-series aluminum alloy. In some cases, the core layer has a different composition from one or both of the clad layers.

Sheets, plates, and shates prepared according to the methods described herein can be delivered after being subjected to solutionizing, quenching, deforming, and rapid pre-aging. The sheets, plates, and shates delivered after the solutionizing, quenching, deforming, and rapid pre-aging can achieve high yield strengths after processing by an end user, for example, by thermal treatment (e.g., coating and paint baking) as known to those of ordinary skill in the art. After the rapid pre-aging step, the sheets, plates, and shates described herein are subjected to a paint baking cycle by heating the products to a temperature ranging from 100 °C to 225 °C for a period of time up to 2 hours (e.g., from 105 °C to 200 °C, from 110 °C to 180 °C, from 115 °C to 175 °C, or from 120 °C to 150 °C). In some examples, the paint baking cycle can be performed for up to 5 minutes, up to 10 minutes, up to 15 minutes, up to 20 minutes, up to 25 minutes, up to 30 minutes, up to 35 minutes, up to 40 minutes, up to 45 minutes, up to 50 minutes, up to 55 minutes, or up to 60 minutes.

The paint bake can further strengthen the aluminum alloy article providing a high-strength 7xxx series aluminum alloy article. After the paint bake, the sheets, the plates, or the shates prepared and processed according to the methods described herein can have yield strengths comparable to 7xxx series alloys in T6 temper prepared using conventional methods (e.g., methods including an aging period of greater than 10 hours, such as approximately 24 hours). The sheets, plates, or shates after the paint bake can be delivered in a T8x temper (e.g., a T81 temper or a T82 temper). In some examples, the sheets, plates, or shates have a yield strength of greater than about 450 MPa after processing according to the rapid aging methods described herein and subsequent thermal treatment. For example, the sheets, plates, or shates can have a yield strength of 460 MPa or greater, 465 MPa or greater, 470 MPa or greater, 475 MPa or greater, 480 MPa or greater, 485 MPa or greater, 490 MPa or greater, 495 MPa or greater, 500 MPa or greater, 505 MPa or greater, 510 MPa or greater, 515 MPa or greater, 520 MPa or greater, 525 MPa or greater, 530 MPa or greater, 535 MPa or greater, 540 MPa or greater, 545 MPa or greater, 550 MPa or greater, 555 MPa or greater, 560 MPa or greater, 565 MPa or greater, 570 MPa or greater, 575 MPa or greater, 580 MPa or greater, 585 MPa or greater, or 590 MPa or greater after processing according to the rapid aging method described herein and subsequent thermal treatment. Combining the rapid pre-aging and paint baking according to the methods described herein can provide high-strength 7xxx series aluminum alloys in the T8x temper comparable to 7xxx that are artificially aged to a T6 temper, eliminating the need for time consuming and costly artificial aging procedures.

In some examples, the sheets, plates, or shates can be naturally aged for a period of time after the rapid pre-aging step and before paint baking without any detrimental effects on the resulting properties (e.g., yield strength) of the sheets, plates, or shates. For example, the alloys can be naturally aged for one or more weeks (e.g., two or more weeks, three or more weeks, four or more weeks, five or more weeks, six or more weeks, seven or more weeks, eight or more weeks, or nine or more weeks) without any detrimental impact on yield strength.

### Methods of Using

The alloys and methods described herein can be used in automotive and/or transportation applications, including motor vehicle, aircraft, and railway applications, or any other desired application. In some examples, the alloys and methods can be used to prepare motor vehicle body part products, such as bumpers, side beams, roof beams, cross beams, pillar reinforcements (e.g., A-pillars, B-pillars, and C-pillars), inner panels, outer panels, side panels, inner hoods, outer hoods, or trunk lid panels. The aluminum alloys and methods described herein can also be used in aircraft or railway vehicle applications, to prepare, for example, external and internal panels.

The alloys and methods described herein can also be used in electronics applications, to prepare, for example, external and internal encasements. For example, the alloys and methods described herein can also be used to prepare housings for electronic devices, including mobile phones and tablet computers. In some examples, the alloys can be used to prepare housings for the outer casing of mobile phones (e.g., smart phones) and tablet bottom chassis.

In certain aspects, the alloys and methods can be used to prepare aerospace vehicle body part products. For example, the disclosed alloys and methods can be used to prepare airplane body parts, such as skin alloys.

The following examples will serve to further illustrate the present invention without, however, constituting any limitation thereof. On the contrary, it is to be clearly understood that resort may be had to various embodiments, modifications and equivalents thereof which, after reading the description herein, may suggest themselves to those skilled in the art without departing from the spirit of the invention.

### EXAMPLES

### Example 1: Exemplary method of making 7xxx series aluminum alloy articles

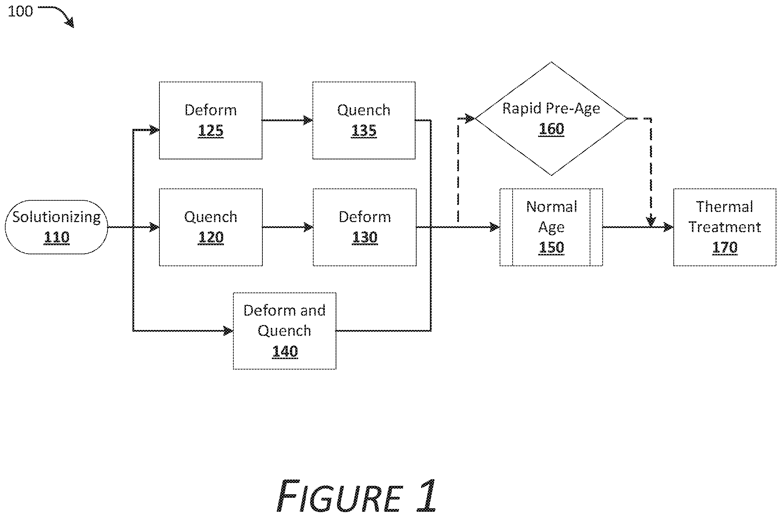

An exemplary method 100 for processing alloys as described herein is illustrated in Figure 1. As-fabricated 7xxx series aluminum alloy sheet, plate, or shate material (referred to as F temper) was solutionized (at 110) at a temperature of at least 460 °C for a period of time of at least 60 seconds. After solutionizing, the aluminum alloy was quenched (at 120) to room temperature with water at a temperature of about 55 °C. After quenching step 120, the aluminum alloy was deformed (at 130) to create an aluminum alloy article.

In another method as described herein, the aluminum alloy article was deformed and quenched in one step (at 140). The aluminum alloy article, at a temperature of between about 380 °C to about 480 °C, was placed into a chilled die, deformed, and die quenched to form an aluminum alloy article.

In yet another method as described herein, after solutionizing the aluminum alloy was deformed (at 125) to create an aluminum alloy article. After deforming step 125, the aluminum alloy article was quenched (at 135) to room temperature with water at a temperature of about 55 °C.

The aluminum alloy article was then subjected to an exemplary rapid pre-aging method 160, wherein the aluminum alloy article was heated to a temperature of about 100 °C to about 225 °C and maintained at about 100 °C to about 225 °C for about 10 minutes to about 45 minutes. The aluminum alloy article was then subjected to a thermal treatment (at 170), namely a paint bake procedure, as described above.

### Example 2: Effect of rapid pre-aging temperature on mechanical properties

Six 7xxx series alloys were prepared for strength testing (see Table 1). Alloys 1-6 were prepared by identical methods. The alloys were solutionized, quenched, and deformed. A sample from each alloy was (1) subjected to conventional aging by heating at 125 °C for 24 hours (to bring the material to "T6" temper); (2) subjected to conventional aging by heating at 125 °C for 24 hours and paint baking (to bring the material to "T6" temper); (3) subjected to the rapid pre-aging method described herein by heating at 125 °C for 10-15 minutes and then paint baking (to bring the material to T8x temper); (4) rapid pre-aging method described herein by heating for 30 minutes at 180 °C (to bring the material to T8x temper); or (5) rapid pre-aging method described herein by heating for 45 minutes at 180 °C (to bring the material to T8x temper).

**Table 1**

| **Alloy** | **Zn** | **Cu** | **Mg** | **Fe** | **Si** | **Zr** | **Mn** | **Cr** | **Ti** |
|---|---|---|---|---|---|---|---|---|---|
| 1 | 5.94 | 1.63 | 2.75 | 0.17 | 0.04 | 0.001 | 0.02 | 0.24 | 0.02 |
| 2 | 5.59 | 1.57 | 2.70 | 0.12 | 0.08 | 0.001 | 0.01 | 0.24 | 0.03 |
| 3 | 9.16 | 1.18 | 2.29 | 0.23 | 0.1 | 0.11 | 0.042 | 0.04 | 0.01 |
| 4 | 9.1 | 0.27 | 2.36 | 0.19 | 0.12 | 0.15 | 0.044 | 0.04 | 0.01 |
| 5 | 9.0 | 1.18 | 2.29 | 0.20 | 0.10 | 0.11 | 0.04 | 0.10 | 0.01 |
| 6 | 5.86 | 1.67 | 2.50 | 0.19 | 0.10 | 0.12 | 0.05 | 0.04 | 0.04 |

| | | | | | | | | | |
|---|---|---|---|---|---|---|---|---|---|
| All expressed in wt. %. | | | | | | | | | |

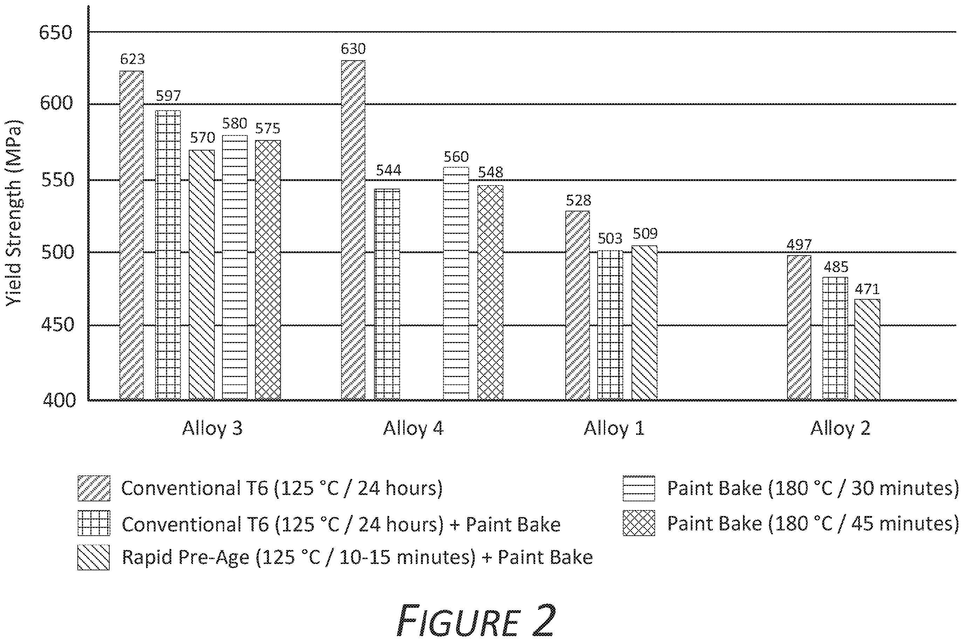

Figure 2 presents the yield strength analysis of 7xxx series alloys prepared according to the methods described herein and according to conventional methods. For each alloy tested, the yield strengths achieved from the rapid pre-aging step combined with paint baking are comparable to alloys processed by conventional methods.

In one example, Alloy 1 was prepared by solution heat treating the material at 480 °C for at least 300 seconds, followed by a water quench at 55 °C, to bring the material to a "W" temper. The material was then subjected to a pre-aging process as described herein by heating at 125 °C for 12 minutes. The strength of the alloy reached 509 MPa following a paint bake cycle.

In another example, Alloy 3 was solution heat treated at 480 °C for 300 seconds, followed by a water quench at 55 °C. The material was then paint baked at 180 °C for 30 minutes and 45 minutes, to result in a sample having yield strengths of 580 MPa and 575 MPa, respectively.

The above data show that combining the rapid pre-aging and paint baking can provide high-strength 7xxx series aluminum alloys in a T8x temper comparable to 7xxx series aluminum alloys that are artificially aged to a T6 temper, eliminating the need for time consuming and costly artificial aging procedures.

### Example 3: Effect of annealing on mechanical properties

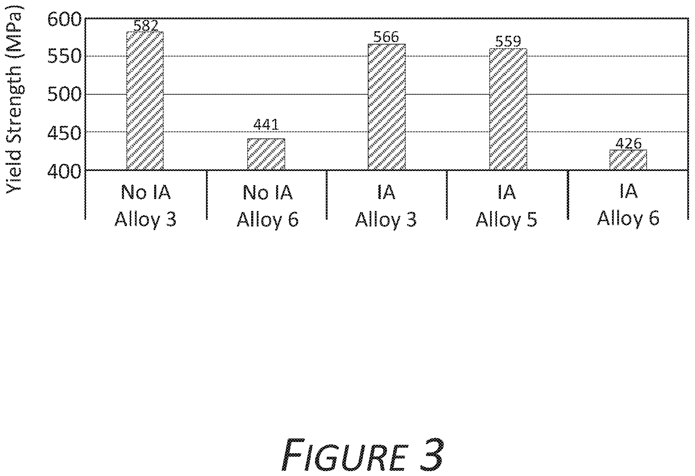

Alloys 3, 5, and 6 (see Table 1) were prepared by hot rolling, optional annealing, cold rolling, solutionizing, quenching, deforming, the exemplary rapid aging, and paint baking at 180 °C for 30 minutes. Figure 3 shows the effect of annealing on the yield strength of the alloys. The optional annealing step was performed for samples referred to as "IA" (i.e., inter-annealing, performed between hot rolling and cold rolling) and the optional annealing step was not performed for samples referred to as "No IA." Annealing was performed by heating the coiled alloy products to a temperature of about 410 °C at a heating rate of about 50 °C per hour. The coiled alloy products were subsequently soaked at about 410 °C for about 1 hour, cooled to about 350 °C and soaked at about 350 °C for about 2 hours. The coils were then allowed to cool to room temperature.

As shown in Figure 3, samples processed without the optional annealing step exhibited a higher yield strength than the respective samples that were annealed. Therefore, the rapid aging step as described herein can provide a high strength aluminum alloy without further thermal processing between hot rolling and cold rolling.

### Example 4: Effect of paint baking on mechanical properties

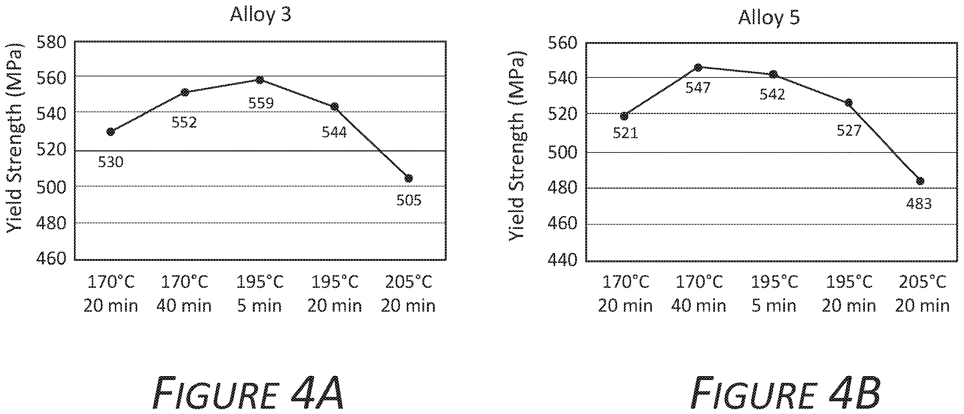

Alloys 3 and 5 (see Tables 1 and 2) were prepared as described above in Example 3 but under varying paint baking conditions, including (i) 170 °C for 20 minutes, (ii) 170 °C for 40 minutes, (iii) 195 °C for 5 minutes, (iv) 195 °C for 20 minutes, and (v) 205 °C for 20 minutes. Figure 4A shows the effect of paint baking on the yield strength of Alloy 3 and Figure 4B shows the effect of paint baking on the yield strength of Alloy 5.

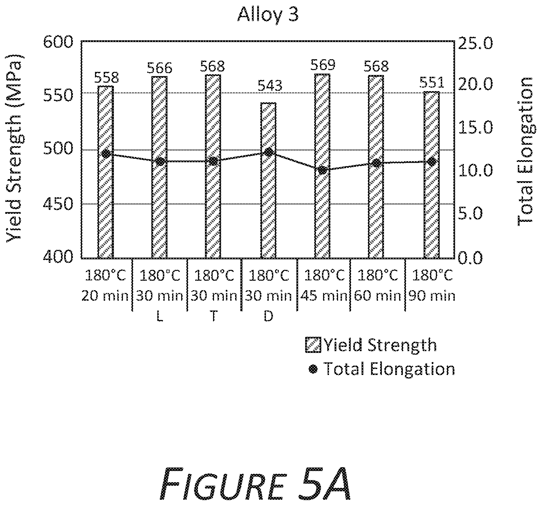

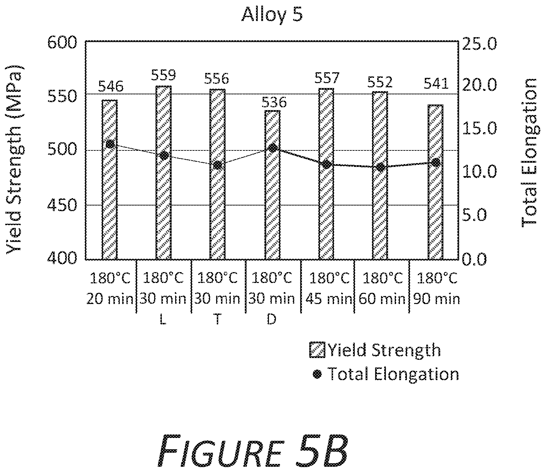

In addition, Alloys 3 and 5 were prepared as described above and under the following paint baking conditions, including (i) 180 °C for 20 minutes, (ii) 180 °C for 30 minutes and being oriented in a longitudinal direction (referred to as "L") relative to a rolling direction employed during hot and cold rolling, (iii) 180 °C for 30 minutes and being oriented in a transverse direction (referred to as "T") rotated about 90° relative to the rolling direction employed during hot and cold rolling, (iv) 180 °C for 30 minutes and being oriented in a diagonal direction (referred to as "D") rotated about 45° relative to the rolling direction employed during hot and cold rolling, (v) 180 °C for 45 minutes, (vi) 180 °C for 60 minutes, and (vii) 180 °C for 90 minutes. Figure 5A shows the effect of the various paint baking on the yield strength and total elongation of Alloy 3. Figure 5B shows the effect of the various paint baking on the yield strength and total elongation of Alloy 5. Alloys 3 and 5 demonstrate that paint baking can be performed for various durations and maintain high yield strength and high total elongation.

### Example 5: Effect of natural aging on mechanical properties

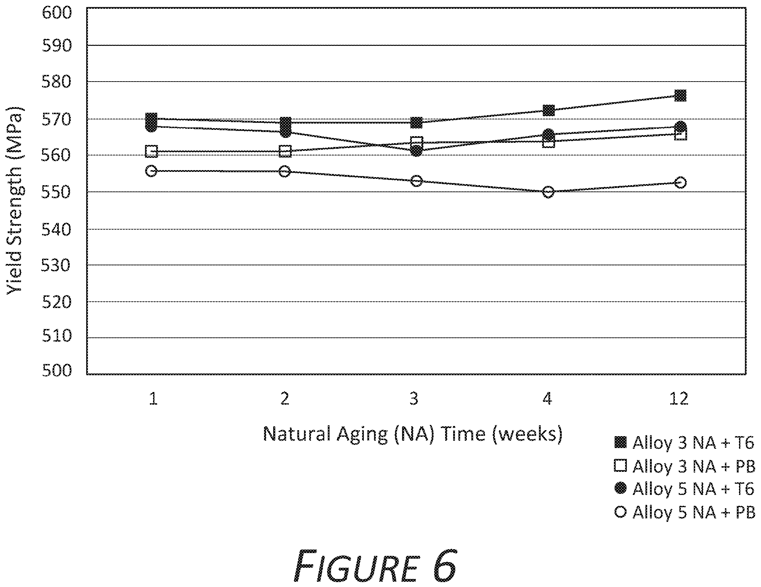

Alloys 3 and 5 were prepared by hot rolling, cold rolling, solutionizing, quenching, and deforming. Figure 6 shows the yield strength of Alloys 3 and 5 after 1 week, 2 weeks, 3 weeks, 4 weeks, and 12 weeks of natural aging at room temperature. A first sample of alloy 3 (referred to as "Alloy 3 NA + T6") was subjected to artificial aging to provide Alloy 3 in a T6 temper after natural aging (referred to as "NA" in Figure 6). A second sample of alloy 3 (referred to as "Alloy 3 NA + PB") was subjected to paint baking at 180 °C for 30 minutes after natural aging. A first sample of alloy 5 (referred to as "Alloy 5 NA + T6") was subjected to artificial aging to provide Alloy 5 in a T6 temper after natural aging (referred to as "NA" in Figure 6). A second sample of alloy 5 (referred to as "Alloy 5 NA + PB") was subjected to paint baking at 180 °C for 30 minutes after natural aging. Evident in the graph, natural aging does not affect the yield strength of alloys subjected to the exemplary processing methods described above.

Various embodiments of the invention have been described in fulfillment of the various objectives of the invention. It should be recognized that these embodiments are merely illustrative of the principles of the present invention. Numerous modifications and adaptions thereof will be readily apparent to those skilled in the art without departing from the scope of the present invention as defined in the following claims.

## Claims

1. A method of processing a 7xxx series aluminum alloy metal product, comprising:
solutionizing a sheet, a plate, or a shate at a temperature of at least 460 °C;
quenching and deforming the sheet, the plate, or the shate to produce an aluminum alloy article;
pre-aging the aluminum alloy article by heating the aluminum alloy article to a temperature of from 100 °C to 225 °C for a period of time of from 10 minutes to 45 minutes, and
thermally treating the aluminum alloy article after the pre-aging step,
wherein the thermally treating step comprises paint baking performed by heating the aluminum alloy article to a temperature of from 100 °C to 225 °C for a period of time up to 2 hours.

2. The method of claim 1, wherein the quenching is performed before the deforming in the quenching and deforming step.

3. The method of claim 1, wherein the deforming is performed before the quenching in the quenching and deforming step.

4. The method of claim 1, wherein the quenching and deforming are performed simultaneously in the quenching and deforming step.

5. The method of any of claims 1-4, wherein the temperature in the pre-aging step is from 100°C to 125°C.

6. The method of any of claims 1-5, wherein the aluminum alloy metal product is prepared from a monolithic alloy or,
wherein the aluminum alloy metal product is prepared from a clad aluminum alloy product having a core layer and at least one clad layer.

## Patentansprüche

1. Verfahren zur Verarbeitung eines Metallprodukts aus Aluminiumlegierung der Reihe 7xxx, umfassend:
Lösungsbehandlung eines Blechs, einer Platte oder eines Shates bei einer Temperatur von mindestens 460 °C;
Abschrecken und Verformen des Blechs, der Platte oder des Shates zur Herstellung einer eines Gegenstands aus einer Aluminiumlegierung;
Voraltern des Aluminiumlegierungsgegenstands durch Erwärmen des Aluminiumlegierungsgegenstands auf eine Temperatur von 100 °C bis 225 °C für eine Zeitdauer von 10 Minuten bis 45 Minuten und thermische Behandlung des Aluminiumlegierungsgegenstands nach dem Voralterungsschritt,
worin der Wärmebehandlungsschritt das Lackeinbrennen umfasst, das durch Erwärmen des Aluminiumlegierungsgegenstands auf eine Temperatur von 100 °C bis 225 °C für eine Zeitdauer von bis zu 2 Stunden durchgeführt wird.

2. Verfahren nach Anspruch 1, worin das Abschrecken vor der Verformung in dem Abschreck- und Verformungsschritt durchgeführt wird.

3. Verfahren nach Anspruch 1, worin die Verformung vor dem Abschrecken im Abschreck- und Verformungsschritt durchgeführt wird.

4. Verfahren nach Anspruch 1, worin das Abschrecken und die Verformung gleichzeitig im Abschreck- und Verformensschritt durchgeführt werden.

5. Verfahren nach einem der Ansprüche 1-4, worin die Temperatur im Voralterungsschritt von 100 °C bis 125 °C ist.

6. Verfahren nach einem der Ansprüche 1-5, worin das Aluminiumlegierungsmetallprodukt aus einer monolithischen Legierung hergestellt wird,
oder worin das Aluminiumlegierungsmetallprodukt aus einem plattierten Aluminiumlegierungsprodukt mit einer Kernschicht und mindestens einer Plattierungsschicht hergestellt wird.

## Revendications

1. Une méthode de traitement d'un produit métallique en alliage d'aluminium de la série 7xxx, comprenant :
la mise en solution d'une feuille, d'une plaque ou d'une 'shate' (feuille et plaque) à une température d'au moins 460 °C ;
la trempe et la déformation de la feuille, de la plaque ou de la 'shate' pour produire un article en alliage d'aluminium ;
le pré-vieillissement de l'article en alliage d'aluminium en chauffant l'article en alliage d'aluminium à une température de 100 °C à 225 °C pendant une période de temps de 10 minutes à 45 minutes, et
le traitement thermique de l'article en alliage d'aluminium après l'étape de pré-vieillissement,
dans lequel l'étape de traitement thermique comprend la cuisson de la peinture effectuée en chauffant l'article en alliage d'aluminium à une température de 100 °C à 225 °C pendant une période de temps allant jusqu'à 2 heures.

2. Procédé selon la revendication 1, dans lequel la trempe est effectuée avant la déformation dans l'étape de trempe et de déformation.

3. Procédé selon la revendication 1, dans lequel la déformation est effectuée avant la trempe dans l'étape de trempe et de déformation.

4. Procédé selon la revendication 1, dans lequel la trempe et la déformation sont effectuées simultanément dans l'étape de trempe et de déformation.

5. Procédé selon l'une quelconque des revendications 1 à 4, dans lequel la température dans l'étape de pré-vieillissement est comprise entre 100 °C et 125 °C.

6. Procédé selon l'une quelconque des revendications 1 à 5, dans lequel le produit métallique en alliage d'aluminium est préparé à partir d'un alliage monolithique ou dans lequel le produit métallique en alliage d'aluminium est préparé à partir d'un produit en alliage d'aluminium plaqué ayant une couche centrale et au moins une couche plaquée.
